(19) Europäisches Patentamt
European Patent Office
Office européen des brevets

(11) EP 0 863 163 A1

(12) EUROPEAN PATENT APPLICATION

(43) Date of publication:
09.09.1998 Bulletin 1998/37

(51) Int Cl.[6]: C08F 8/12, C08J 3/12,
C08K 5/098

(21) Application number: 98301207.1

(22) Date of filing: 19.02.1998

(84) Designated Contracting States:
AT BE CH DE DK ES FI FR GB GR IE IT LI LU MC
NL PT SE
Designated Extension States:
AL LT LV MK RO SI

(30) Priority: 03.03.1997 US 38135 P

(71) Applicant: ROHM AND HAAS COMPANY
Philadelphia, Pennsylvania 19106-2399 (US)

(72) Inventor: Chiou, Shang-Jaw
Lower Gwynedd, PA 19002 (JP)

(74) Representative: Buckley, Guy Julian et al
ROHM AND HAAS (UK) LTD.
European Operations Patent Department
Lennig House
2 Mason's Avenue
Croydon CR9 3NB (GB)

# (54) Polymer emulsions and polymer powders therefrom

(57) Polymer emulsions and polymers therefrom are provided. The polymer emulsions are suitable for spray-drying to form spray-dried polymers. These spray-dried polymers are readily redispersible in water.



Printed by Jouve, 75001 PARIS (FR)

## Description

The present invention relates to polymer emulsions and polymer powders therefrom. More particularly, the present invention relates to polymer emulsions which are suitable for spray-drying to form spray-dried polymers. These spray-dried polymers are particularly useful for modifying hydraulic cement compositions.

"Emulsion polymer", as used herein, refers to a water-insoluble polymer which is prepared by emulsion polymerization techniques.

"Polymer emulsion", as used herein, refers to an aqueous composition having discrete, water-insoluble polymer particles dispersed therein.

"Glass transition temperature," or "$T_g$," as used herein, means the temperature at or above which a glassy polymer will undergo segmental motion of the polymer chain. Glass transition temperatures of a polymer can be estimated by the Fox equation [Bulletin of American Physics Society 1, 3, page 123 (1956)] as follows:

$$\frac{1}{T_g} = \frac{w_1}{T_{g(1)}} + \frac{w_2}{T_{g(2)}}$$

For a copolymer, $w_1$ and $w_2$ refer to the weight fraction of the two comonomers, and $T_{g(1)}$ and $T_{g(2)}$ refer to the glass transition temperatures of the two corresponding homopolymers. For polymers containing three or more monomers, additional terms are added ($w_n/T_{g(n)}$). The Tg of a polymer can also be measured by various techniques including, for example, differential scanning calorimetry ("DSC"). The particular values of Tg reported hereinafter are estimations based on the Fox equation.

As used herein, acrylate and methacrylate are referred to as "(meth)acrylate," acrylic acid and methacrylic acid are referred to as "(meth)acrylic acid."

There are many industrial applications, including cement modification, for polymers which are in the form of dry powders. One method for preparing dry polymer powders is by spray-drying a polymer emulsion. However, there are many difficulties associated with this method of preparing dry polymer powders. The powders often coagulate, form clumps, experience caking, agglomerate and clog the nozzle of the spray-dryer. Furthermore, coagulated, clumped, caked or agglomerated polymer powders are often unsuitable for their intended use because the polymer powder fails to adequately redisperse.

Several attempts have been made to address these problems. One method of addressing the problem is to ensure that there is a high Tg, protective polymeric coating, or shell, on the polymer before it is spray-dried.

Other attempts to address these problems have focused on adding suitable anti-caking agents and dispersing aids to the polymer emulsion. Among the suitable dispersing aids is polyvinyl alcohol ("pVOH") as described in United States Patent No. 5,473,013. However, the use of pVOH has drawbacks because it is generally used at high levels. Polymer powders prepared from polymer emulsions to which pVOH has been added generally exhibit poor redispersibility. Another drawback is that because the high levels of pVOH increases the viscosity of the polymer emulsion, the total solids level of the emulsion must be reduced in order to get the emulsion to flow through the nozzle of the spray-dryer.

The present invention seeks to overcome the problems associated with these methods of preparing polymer which are suitable for spray-drying.

In a first aspect of the present invention, there is provided an aqueous composition comprising

a) water;
b) a water soluble polymer comprising, as polymerized units, at least 50 percent by weight of residues of the formula (I)

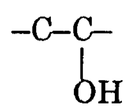

c) an emulsion polymer comprising, as polymerized units, from 5 to 75 percent by weight of residues of the formula (I); and
d) calcium acetate.

In a second aspect of the present invention, there is provided a polymer powder comprising

a) from 5 to 45 percent by weight of a water soluble polymer comprising, as polymerized units, at least 50 percent

by weight of residues of the formula (I)

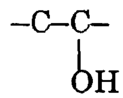

b) from 40 to 90 percent by weight of an emulsion polymer comprising, as polymerized units, from 5 to 75 percent by weight of residues of the formula (I); and
c) from 3 to 40 percent by weight of calcium acetate.

In a third aspect of the present invention, there is provided a method for preparing polymer emulsions suitable for spray-drying comprising

(i) providing an aqueous polymer emulsion comprising

(a) water; and
(b) an emulsion polymer comprising, as polymerized units, from 20 to 100 percent by weight of vinyl acetate; and

(ii) adding calcium hydroxide to the aqueous polymer emulsion in an amount sufficient to hydrolyze from 5 to 75 equivalent percent of the polymerized units of vinyl acetate.

In a fourth aspect of the present invention, there is provided a method for preparing a polymer powder comprising

(i) providing an aqueous composition comprising

a) water;
b) a water soluble polymer comprising, as polymerized units, at least 50 percent by weight of residues of the formula (I)

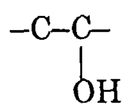

c) an emulsion polymer comprising, as polymerized units, from 5 to 75 percent by weight of residues of the formula (I); and
d) calcium acetate; and

(ii) spray-drying the aqueous composition to form a polymer powder.

In a fifth aspect of the present invention, there is provided a method of modifying a cement composition comprising

(i) providing a cement composition; and
(ii) providing from 5 to 30 percent by weight based on the weight of the cement composition of a polymer powder comprising

a) from 5 to 45 percent by weight of a water soluble polymer comprising, as polymerized units, at least 50 percent by weight of residues of the formula (I)

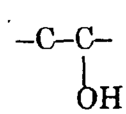

b) from 40 to 90 percent by weight of an emulsion polymer comprising, as polymerized units, from 5 to 75

percent by weight of residues of the formula (I); and
c) from 3 to 40 percent by weight of calcium acetate;

(iii) providing water; and
(iv) admixing components (i), (ii) and (iii).

Surprisingly, using calcium hydroxide to neutralize polymer emulsions of vinylacetate-containing emulsion polymers results in polymer emulsions which are suitable for spray-drying. Furthermore, these polymer emulsions are suitable for spray-drying without the need for the separate addition of conventional dispersing aids such as pVOH. The spray-drying of these polymer emulsions produces polymer powders which are redispersible and useful, for example, as redispersible cement modifiers, redispersible adhesives, redispersible coatings, redispersible films, redispersible binders for caulks, mastics, floor polishes, redispersible carriers or adjuvants for agricultural chemicals and the like.

Vinyl acetate is known to be useful as a monomer in the manufacture of emulsion polymers. Vinyl acetate can be polymerized by typical emulsion polymerization processes. The resulting emulsion polymer will contain many polymer chains comprising, as polymerized units, vinyl acetate. In the event that these emulsion polymers are hydrolyzed, a small, but significant portion of the polymer chains migrate into the aqueous phase to form a water soluble polymer containing, as polymerized units, polyvinylalcohol. Thus, the resulting polymer emulsion, from an aqueous polymerization process where vinyl acetate is a monomer, and which is subsequently at least partially hydrolyzed, contains both (a) water soluble polymer containing residues of vinylalcohol, and (b) emulsion polymer containing residues of vinylalcohol.

The emulsion polymer contains, as polymerized units, vinyl acetate at a level of from 20 to 100, preferably from 30 to 95, most preferably from 40 to 90 percent by weight of the emulsion polymer.

The water-soluble polymer formed from hydrolyzing the polymer emulsion contains vinyl alcohol residues at a level of at least 50, preferably from 60 to 100, most preferably from 70 to 90 percent by weight of the water-soluble polymer.

Monomers other than vinyl acetate which can be used in addition to vinyl acetate are well known to those skilled in the art. Such other monomers include, but are not limited to

- $\alpha,\beta$-ethylenically unsaturated monobasic or dibasic carboxylic acids or their anhydrides (such as acrylic acid, methacrylic acid, crotonic acid, vinylacetic acid, acryloxypropionic acid, maleic acid, maleic anhydride, itaconic acid, mesaconic acid, fumaric acid and citraconic acid, allylsulfonic acid, allylphosphonic acid, vinylphosphonic acid, vinylsulfonic acid, 2-acrylamido-2-methylpropanesulfonic acid,) and salts of the acids,
- $C_1$-$C_{20}$ alkyl esters of (meth)acrylic acid (such as methylacrylate, ethylacrylate, butyl acrylate, ethylhexylacrylate, methylmethacrylate, butylmethacrylate and laurylmethacrylate),
- $C_1$-$C_{20}$ hydroxyalkyl esters of (meth)acrylic acid (such as hydroxyethylacrylate, hydroxypropylacrylate, hydroxyethylmethacrylate and hydroxypropylmethacrylate),
- $C_1$-$C_8$ alkyl-substituted styrene, halosubstituted styrene, and styrenesulfonic acid and salts thereof,
- (meth)acrylamide, and $C_1$-$C_{12}$ alkyl substituted (meth)acrylamide (such as N-tertiarybutylacrylamide, N-methylacrylamide and N,N-dimethylacrylamide),
- acrylonitrile, methacrylonitrile, allyl alcohol, dimethylaminoethyl acrylate, dimethylaminoethylmethacrylate, phosphoethyl methacrylate, N-vinylpyrrolidone, N-vinylformamide, and N-vinylimidazole, styrene, vinyl chloride, vinyl versetate, ethylene;
- crosslinking monomers (such as ethyleneglycol dimethacrylate, diethyleneglycol dimethacrylate, triethyleneglycol dimethacrylate, polyethyleneglycol dimethacrylate, polypropyleneglycol dimethacrylate, neopentylglycol dimethacrylate, 1,3-butyleneglycol diacrylate, neopentylglycol diacrylate, trimethylolethane trimethacrylate, dipentaerythritol triacrylate, dipentaerythritol tetraacrylate, dipentaerythritol pentaacrylate, 1,3-butyleneglycol dimethacrylate, trimethylolpropane trimethacrylate, trimethylolpropane triacrylate, tripropyleneglycol diacrylate, divinyl benzene, trivinyl benzene; allyl-, methallyl-, dicyclopentenyl-, crotyl- and vinyl-esters of acrylic acid, methacrylic acid, maleic acid (mono- and di-esters), fumaric acid (mono- and di-esters) and itaconic acid (mono- and di-esters); N- or N,N di-, allyl-, methallyl-, crotyl- and vinyl-amides of acrylic acid and methacrylic acid; N-methallyl and crotyl-maleimide; alkenyl or cycloalkenyl esters of acrylic acid, methacrylic acid, maleic acid (mono- and di-esters), fumaric acid (mono- and di-esters), itaconic acid (mono- and di-esters); 1,3-butadiene; isoprene; methallyl-, crotyl- and allylmercaptan; allyl ether, methallyl ether, crotyl ether and vinyl ether; vinyl esters of 3-butenoic and 4-pentenoic acids; diallyl phthalate; triallyl cyanurate; O-allylphosphonate, methallylphosphonate, P-methallylphosphonate; triallylphosphate, trimethallylphosphate, O,O-diallylphosphate, dimethallylphosphate; vinyl ethers and vinyl thioethers of cycloalkenols and cycloalkene thiols; vinyl esters of cycloalkene carboxylic acids; 1,3-butadiene, isoprene and other conjugated dienes.
- photopolymerizable monomers, ureido-functional monomers
- and combinations thereof.

Preferably, the monomer mixture used to prepare the polymer emulsion comprises (a) from 29.9 to 94.9 percent by weight vinyl acetate, (b) from 5 to 70 percent by weight of a $C_1$-$C_4$ alkyl(methacrylate), most preferably butyl acrylate, (c) from 0.05 to 5 percent by weight of a crosslinking monomer, and (c) from 0.1 to 5 percent by weight of an acid-functional monomer.

The monomers which make up the polymers are selected, in part, so that the Tg of the resulting emulsion polymer is from -30°C to +60°C, preferably from -20°C to +45°C, most preferably from -10°C to +30°C.

After hydrolysis, the emulsion polymer is generally present in the polymer emulsion at a level of from 20 to 55, preferably from 30 to 45 percent by weight of the polymer emulsion. After hydrolysis, the water soluble polymer is generally present in the polymer emulsion at a level of from 3 to 40, preferably from 5 to 30 percent by weight of the polymer emulsion.

The polymers of the present invention are aqueous emulsion polymers prepared by any conventional aqueous emulsion polymerization technique. Such techniques are well known to those of ordinary skill in the art of emulsion polymerization. The polymers may, for example, be prepared from a seed; they may be single stage or multiple stage; they may have a core-shell morphology. The selection of the type and level of initiators, surfactants, protective colloids, chain regulators and the like is within the ordinary skill of the artisan. Similarly, the process conditions such as temperature, heating profile, solids level, rates and timing of monomer addition, mixing, and the like, are also within the ordinary skill of the artisan.

The vinyl acetate residues,

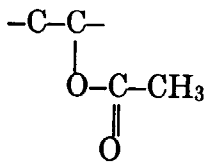 ,

in the polymer emulsion are at least partially hydrolyzed to form vinyl alcohol residues,

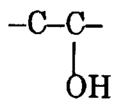

These vinyl alcohol residues make the polymer chains more water soluble. Some polymer chains, if they are of sufficiently low molecular weight, contain a sufficient amount of vinyl alcohol residues and are not appreciably crosslinked into the emulsion polymer, may migrate into the aqueous phase of the polymer emulsion.

The vinyl acetate residues of the polymer emulsion are at least partially hydrolyzed with calcium hydroxide which results in (a) conversion of at least a portion of the vinyl acetate residues into vinyl alcohol residues, and (b) the formation of calcium acetate. It is possible that the addition of calcium hydroxide might hydrolyze a portion of the other monomers present, if any, in the polymer emulsion; for example, ethyl acrylate residues might hydrolyze to become acrylic acid residues. Preferably, calcium hydroxide is used in an amount sufficient to convert from 4.5 to 67.5, preferably from 10 to 50, most preferably from 15 to 30 percent of the vinyl acetate residues in the polymer emulsion to vinyl alcohol residues. Calcium hydroxide can be used in a solid form, as a solution or a combination thereof. Preferably, calcium hydroxide is used as a dilute aqueous solution. The hydrolysis of the vinyl acetate residues can be facilitated by the addition of one or more catalysts, conducting the hydrolysis at an elevated temperature, or a combination thereof. Suitable hydrolysis catalysts include, for example, dodecylbenzenesulfonic acid and perchloric acid. Preferably, the hydrolysis is conducted at a temperature in the range of from 50°C to 95°C, more preferably from 60°C to 85°C.

In addition to calcium hydroxide, one or more other hydrolyzing agents may be used. Other hydrolyzing agents include, for example, sodium hydroxide, potassium hydroxide, lithium hydroxide, and quaternary amine hydroxides, such as t-butyl ammonium hydroxide.

The polymer emulsion containing vinyl alcohol residues and calcium acetate can be spray-dried by conventional spray-drying processes to form redispersible polymer powder. Selection of the process conditions for spray drying are within the skill of the ordinary artisan including, feed rate, inlet temperature, and outlet temperature. The polymer powders thus produced are redispersible which makes them useful in many applications such as redispersible cement modifiers, redispersible adhesives, redispersible coatings, redispersible films, redispersible binders for caulks, mastics, floor polishes, redispersible carriers or adjuvants for agricultural chemicals, and the like. The emulsion polymers are particularly useful as cement modifiers.

Although it is unnecessary, conventional dispersing aids, anti-caking agents, or a combination thereof, can be

used. These materials can be added as part of the polymerization process; they can be added to the polymer emulsion before spray-drying, during spray drying, to the polymer powder, or a combination thereof. Suitable anti-caking agents include, for example, silica, silicates such as alumina silicate, carbonates such as calcium carbonate, clay, and the like. A suitable dispersing aid is pVOH. The present invention, however, makes it unnecessary to include additional pVOH beyond that which is present in the neutralized polymer emulsion.

Borax or boric acid can be added to the polymer powder to crosslink the powder which improves the water resistance properties of formulations and films made using the polymer powder. If desired, the calcium acetate in the powder can be removed, for example, by ion exchange resin. Removing the calcium acetate may also improve the water resistance properties of the polymer powder.

**Polymer Emulsion 1:**

To a 5 liter, 4-necked round bottom flask equipped with a mechanical stirrer, thermocouple, condenser, and nitrogen sparge was added 600 grams of deionized water. The contents of the flask were heated to 75°C. A catalyst solution was prepared by dissolving 5 grams of sodium persulfate in 30 grams of deionized water. The catalyst solution and 10 grams of a 0.15% by weight aqueous ferrous sulfate solution were added to the flask. A first cofeed solution was prepared by dissolving 1 gram of isoascorbic acid in 105 grams of deionized water. A second cofeed solution was prepared by dissolving 5 grams of sodium persulfate in 105 grams of deionized water. A monomer emulsion was prepared by combining the components set forth in Table 1, below. The monomer emulsion, the first cofeed solution and the second cofeed solution were added to the flask linearly and separately over a period of three hours while maintaining the contents of the flask at a temperature of 70-77°C. When all feeds were completed, the level of residual monomers was reduced by adding dilute aqueous solutions of t-butylhydroperoxide and sodium bisulfite to the kettle at 65°C, 60°C and again at 53°C. After adding the three dilute aqueous solutions, the contents of the flask were cooled to below 40°C and then filtered through a 100 mesh screen. The final product was 59.5 percent by weight polymer solids. Only a trace amount of gel was observed on the 100 mesh screen.

TABLE I

| **Monomer Emulsion:** | |
|---|---|
| **Amount (grams)** | **Components** |
| 520 | Deionized Water |
| 25 | Sodium Dodecylbenzenesulfonate (23 percent by weight solution) |
| 16.5 | Aerosol 103* (30 percent by weight solution) |
| 32 | Triton X-405** (70 percent by weight solution) |
| 220 | Butyl Acrylate |
| 2004 | Vinyl Acetate |
| 22.3 | Sodium Vinyl Sulfonate (25 percent by weight solution) |

*Aerosol 103 is Disodium nonoxynol-10 Sulfosuccinate sold by Cytek

**Triton X-405 is a nonionic surfactant sold by Union Carbide Chemicals and Polymers

The emulsion polymers were prepared in a similar manner as Example 1, above, (except polymers 3 and 5 were made using a butyl acrylate and methylmethacrylate copolymer seed) having the monomer compositions shown in Table II below. All numbers for monomer composition reported in Table II, below, are percentages by weight, based on the total monomer composition. The solids reported in Table II, below, are percentages by weight of total polymer solids based on the total weight of the emulsion.

TABLE II

| Polymer Emulsion | Monomer Composition | Solids |
|---|---|---|
| 1 | 89.75 vinyl acetate, 10 butyl acrylate, 0.25 sodium vinyl sulfonate | 59.5 |
| 2 | 69.75 vinyl acetate, 30 ethyl acrylate, 0.25 sodium vinyl sulfonate | 59.1 |
| 3 | 80.65 vinyl acetate, 19.1 butyl acrylate, 0.25 sodium vinyl sulfonate | 55.0 |
| 4 | 85 vinyl acetate, 15 butyl acrylate | 55.0 |
| 5 | 85.3 vinyl acetate, 14 butyl acrylate, 0.45 diallyl maleate, 0.25 sodium vinyl sulfonate | 37.0 |

**Example 1**

A neutralizer solution was prepared by combining 48 grams of calcium hydroxide, 52 grams of sodium hydroxide and 700 grams water. To a 5 liter, 4-necked round bottom flask equipped with a mechanical stirrer, thermocouple, condenser, and nitrogen sparge was added 2000 grams of Polymer Emulsion 1 and the neutralizer solution. The mixture was then heated at 65°C for two hours. The hydrolyzed product was then cooled and filtered through an 100 mesh screen. Only a trace amount of gel was observed on the screen.

**Example 2**

The process of Example 1 was repeated except 2000 grams of Polymer Emulsion 2 were used. Only a trace amount of gel was observed on the screen.

**Example 3 - Comparative**

To a 5 liter, 4-necked round bottom flask equipped with a mechanical stirrer, thermocouple, condenser, and nitrogen sparge was added 1500 grams of Polymer 3 and 900 grams of 8.33 percent by weight aqueous solution of sodium hydroxide (corresponds to 0.78 milliequivalents of hydroxide based on equivalents of vinyl acetate in sample of Polymer 3). The mixture was then heated at 78°C for an hour. The hydrolyzed product was then cooled and filtered through an 100 mesh screen. A total of 8.5 grams of wet gel remained on the screen.

**Example 4**

To a 5 liter, 4-necked round bottom flask equipped with a mechanical stirrer, thermocouple, condenser, and nitrogen sparge was added 1500 grams of Polymer 3 and 900 grams of 8.33 percent by weight aqueous solution of calcium hydroxide (corresponds to 0.82 milliequivalents of hydroxide based on equivalents of vinyl acetate in sample of Polymer 3). The mixture was then heated at 80°C for two hours. The hydrolyzed product was then cooled and filtered through an 100 mesh screen. Only a trace amount of gel was observed on the screen.

**Example 5**

To a 5 liter, 4-necked round bottom flask equipped with a mechanical stirrer, thermocouple, condenser, and nitrogen sparge was added 2040 grams of Polymer 4 and 888 grams of 6.53 percent by weight aqueous solution of calcium hydroxide. The mixture was then heated at 85°C for two hours. The hydrolyzed product was then cooled and filtered through an 100 mesh screen. A total of 2.6 grams of wet gel remained on the screen.

**Example 6A - Comparative**

To a 5 liter, 4-necked round bottom flask equipped with a mechanical stirrer, thermocouple, condenser, and nitrogen sparge was added 1500 grams of Polymer 3 and 563 grams of a 20 percent by weight aqueous solution of polyvinyl alcohol. The total solids level of this mixture was 45.4 percent by weight. The weight ratio in the mixture of polymer solids in Polymer 3 to polyvinyl alcohol was 88:12.

**Example 6 B - Comparative**

To a 5 liter, 4-necked round bottom flask equipped with a mechanical stirrer, thermocouple, condenser, and nitrogen sparge was added 1000 grams of the mixture prepared in 6A, above and 499 grams of a 20 percent by weight aqueous solution of calcium acetate. The total solids level of this mixture was 36.9 percent by weight. The weight ratio in the mixture of polymer solids in Polymer 3 to polyvinyl alcohol to calcium acetate was 72:10:18).

**Example 7**

A neutralizer solution was prepared by combining 37.5 grams of calcium hydroxide and 200 grams water. To a 5 liter, 4-necked round bottom flask equipped with a mechanical stirrer, thermocouple, condenser, and nitrogen sparge was added 1500 grams of Polymer 3, 181.5 grams of a 17.3 percent by weight aqueous solution of polyvinyl alcohol and the neutralizer solution. The mixture was then heated at 85°C for one and one half hours. The total solids level of this mixture was 45.5 percent by weight. The hydrolyzed product was then cooled and filtered through an 100 mesh screen. Only a trace amount of gel was observed on the screen.

**Example 8**

The procedure of Example 7 was repeated except that the neutralizer solution was prepared by combining 75 grams of calcium hydroxide and 300 grams of water. The total solids level of this mixture was 44.4 percent by weight. The hydrolyzed product was then cooled and filtered through an 100 mesh screen. Only a trace amount of gel was observed on the screen.

**Example 9**

A neutralizer solution was prepared by combining 156 grams of calcium hydroxide, 52.5 grams of potassium hydroxide (45% solids) and 350 grams water. To a 5 liter, 4-necked round bottom flask equipped with a mechanical stirrer, thermocouple, condenser, and nitrogen sparge was added 4800 grams of Polymer Emulsion 5 and the neutralizer solution. The mixture was then heated at 62°C for three hours. The hydrolyzed product was then cooled and filtered through a 100 mesh screen. Only a trace amount of gel was observed on the screen.

**Polymer Isolation as a Solid**

Each of the mixtures prepared in Examples 1-9 above were spray-dried using a Bowen Model BLSA laboratory spray dryer under the following conditions: inlet air temperature was adjusted to 125°C; outlet air temperature was 57°C as regulated by the feed rate; 3 percent by weight based on polymer solids of Winofil S (a stearic acid coated calcium carbonate) anti-caking agent. Each of the resulting products had a residual moisture level below 2 percent by weight. The products resulting from the spray-drying process were redispersed in water by adding 1 part by weight resulting powder in 100 parts by weight of water and shaking. The particle size of redispersed powders were measured after about 1 minute by BI-90 (Brookhaven Instruments Particle Sizer). Each of the products resulting from the spray-drying process were free-flowing white powders which readily redispersed in water except the products resulting from Examples 6A and 6B.

| Example | Neutralizer | Gel | Comment on Spray Dried Powders | Particle Size (microns) |
|---|---|---|---|---|
| 1 | $Ca(OH)_2$/NaOH | trace | | < 1 |
| 2 | $Ca(OH)_2$/NaOH | trace | | < 1 |
| 3 | NaOH | 8.5 grams | | < 1 |
| 4 | $Ca(OH)_2$ | trace | | < 1 |
| 5 | $Ca(OH)_2$ | 0.26 grams | | < 1 |
| 6a | -- | -- | Low yield, caked powder | >4.0 |
| 6b | Calcium acetate* | trace | Low yield, free flow | >4.0 |
| 7 | $Ca(OH)_2$ | trace | | < 1 |
| 8 | $Ca(OH)_2$ | trace | | < 1 |
| 9 | $Ca(OH)_2$ | trace | | < 1 |

*Calcium acetate is not a sufficiently strong acid to hydrolyze vinyl acetate.

The examples show that the polymer emulsions containing vinyl acetate residues which were at least partially neutralized with calcium hydroxide resulted in free-flowing white powders which readily redispersed in water. By contrast, when calcium hydroxide was not used, unacceptably high levels of gel were formed in the polymer emulsion (Comparative Example 3), or unacceptably large particles were formed in the powder with corresponding low yield of powder (Comparative Examples 6A and 6B).

**Example 10**

The wet out time of a cement formulation containing the powder from Example 9 was evaluated by combining the following components, mixing by hand and evaluating the time elapsed for complete wet out of the mortar mixture.

250 grams of sand (57 mesh)
100 grams of Portland cement

15 grams of powder from Example 9 and 45 grams of water.

The mortar mixture was completely wet out within 15 seconds of mixing.

The thin section properties of this mortar were evaluated by preparing a layer of the mortar having a thickness of from 1/16 to 1/32 inch on a concrete substrate. This layer was allowed to cure at room temperature for 24 hours. The cured thin sections were scraped with a knife and a screwdriver. The thin sections remained adhered to the substrate and resisted deformations to a comparable extent as other commercially available cement modifiers.

## Claims

**1.** An aqueous composition comprising

a) water;
b) a water soluble polymer comprising, as polymerized units, at least 50 percent by weight of residues of the formula (I)

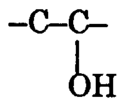

c) an emulsion polymer comprising, as polymerized units, from 5 to 75 percent by weight of residues of the formula (I); and
d) calcium acetate.

**2.** A polymer powder comprising

a) from 5 to 45 percent by weight of a water soluble polymer comprising, as polymerized units, at least 50 percent by weight of residues of the formula (I)

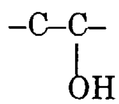

b) from 40 to 90 percent by weight of an emulsion polymer comprising, as polymerized units, from 5 to 75 percent by weight of residues of the formula (I); and
c) from 3 to 40 percent by weight of calcium acetate.

**3.** A method for preparing polymer emulsions suitable for spray-drying comprising

(i) providing an aqueous polymer emulsion comprising

(a) water; and
(b) an emulsion polymer comprising, as polymerized units, from 20 to 100 percent by weight of vinyl acetate; and

(ii) adding calcium hydroxide to the aqueous polymer emulsion in an amount sufficient to hydrolyze from 5 to 75 equivalent percent of the polymerized units of vinyl acetate.

**4.** A method for preparing a polymer powder comprising

(i) providing an aqueous composition comprising

a) water;

b) a water soluble polymer comprising, as polymerized units, at least 50 percent by weight of residues of the formula (I)

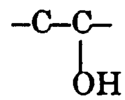

c) an emulsion polymer comprising, as polymerized units, from 5 to 75 percent by weight of residues of the formula (I); and

d) calcium acetate; and

(ii) spray-drying the aqueous composition to form a polymer powder.

**5.** A method of modifying a cement composition comprising

(i) providing a cement composition; and

(ii) providing from 5 to 30 percent by weight based on the weight of the cement composition of a polymer powder comprising

a) from 5 to 45 percent by weight of a water soluble polymer comprising, as polymerized units, at least 50 percent by weight of residues of the formula (I)

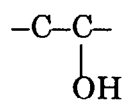

b) from 40 to 90 percent by weight of an emulsion polymer comprising, as polymerized units, from 5 to 75 percent by weight of residues of the formula (I); and

c) from 3 to 40 percent by weight of calcium acetate;

(iii) providing water; and

(iv) admixing components (i), (ii) and (iii).

European Patent Office

# EUROPEAN SEARCH REPORT

Application Number
EP 98 30 1207

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,Y | EP 0 680 993 A (AIR PRODUCTS AND CHEMICALS, INC.) 8 November 1995<br>* claims 1-15 * | 1-5 | C08F8/12<br>C08J3/12<br>C08K5/098 |
| Y | GB 889 103 A (KANEGAFUCHI SPINNING CO., LTD.)<br>* page 7, line 26 - line 125; claims 1-16 * | 1-5 | |
| Y | PATENT ABSTRACTS OF JAPAN<br>vol. 005, no. 098 (C-060), 25 June 1981<br>& JP 56 041204 A (KURARAY CO., LTD.), 17 April 1981,<br>* abstract * | 1-5 | |
| Y | CHEMICAL ABSTRACTS, vol. 85, no. 2, 12 July 1976<br>Columbus, Ohio, US;<br>abstract no. 6923e,<br>page 69; column 1;<br>XP002067863<br>* abstract * | 1-5 | |
| Y | & JP 76 017 996 A (MOTOZATO, YOSHIAKI) | 1-5 | **TECHNICAL FIELDS SEARCHED (Int.Cl.6)**<br>C08F<br>C08J<br>C08K |
| A | PATENT ABSTRACTS OF JAPAN<br>vol. 013, no. 273 (C-609), 22 June 1989<br>& JP 01 066262 A (KURARAY CO., LTD.), 13 March 1989,<br>* abstract * | 1 | |
| A | FR 2 104 117 A (HOECHST AG) 14 April 1972<br>* page 2, line 14 - line 31; claim 1 * | 1 | |
| A | DE 18 10 117 A (THE FIRESTONE TIRE & RUBBER COMPANY) 14 August 1969<br>* page 1, paragraph 3 - page 2, paragraph 4; claims 1-5 * | 1 | |
| | -/-- | | |

The present search report has been drawn up for all claims

| Place of search | Date of completion of the search | Examiner |
|---|---|---|
| THE HAGUE | 12 June 1998 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 98 30 1207

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 038 009 A (BASF AG) 21 October 1981<br>* claims 1-5 *<br>----- | 1 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 12 June 1998 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)